# EUROPEAN PATENT APPLICATION

(11) **EP 1 939 145 A1**
(43) Date of publication of application: **02.07.2008**
(21) Application number: 06465016.1
(22) Date of filing: 21.12.2006
(51) Int. Cl.: C02F 1/68

(54) **Mineralization device**

(71) Applicant: Advantalife, Ltd., 90-212 Lodz (PL)
(72) Inventor: Sakowsky, Jon, Monkton MD Maryland 21111 (US)
(74) Representative: Rumpel, Alicja

(57) **Abstract**

The unit for mineralization of both filtered and unfiltered water has the oval base 1 with the mineralizing packs 2, to which the tank 3 is attached, containing the elastic membrane 4 in its inside, which separates two parts of the tank 3 one from each other; the unit is also provided with a set of connections, where filtrating equipment to supply the system with water are attached to. The outer shape of the tank 3 has two spherical surfaces turned one to each other. In the central part of the tank 3 and on its outer surface, the reinforcing band 7 is situated, the height of which determines a point in the inside of the unit where the membrane 4 should be fastened.

## Description

The subject-matter of the invention is the mineralizer used in order to restore mineral equilibrium of water after processes of treatment in filtration systems.

All filtration processes are connected with segregation of components of solutions subjected to filtration. Irrespective of the fact, whether such processes are conducted in a natural or forced way, they are always associated with mechanical retention of solid particles of substances (contaminations) in porous cells of other substances (filters). Unfortunately, mechanical interaction on the solution, schedule s particles by their dimensions and not by their quality or type. That's why the filtered substance (filtrate), as having been already treated, is free both from contaminations as well as of desired compounds. The repeated introduction of minerals into liquid may be performed by means of adding salts of minerals to it which can easily dissociate or by means of leaching such compounds by medium flowing through it. In the case of filtration carried out on the basis of the reverse osmosis, ions of minerals contained in the water are in a water-soluble form and are removed from it.

The solution known in accordance with the patent description JP 63190692 describes both the method and the unit, in which filtered warm water is directed towards the unit situated behind the filter - i.e. the mineralizer. Inside the mineralizer there is a substance which, when in contact with the heated water, separates minerals absorbed then by water. Liquid, which has been mineralized in this way, is conveyed further to the installation and to the outflow. From time to time it is required that unheated water is to be used, that's why mineralizing substances should be separated not under the influence of temperature but due to physical and chemical properties of water.

According to the patent JP 611181485, the unit in a form of a two-chamber cylinder mounted to the water connection, is presented. In one of the inside chambers of the said unit an active substance is contained, which is activated carbon, purifying the medium flowing through it; on the other hand, the bottom chamber is filled with mineralizing substance. Water received as a result of the described unit application may be used for food or other purposes.

Another method of water mineralization was described in the patent JP 08089918. Two-tank apparatus is constructed in such a way that in the first tank where water is flowing in and where it is subjected to purification and separation from hazardous substances. These substances are deposited on the tank walls and the purified water is getting into the second tank where it undergoes mineralization. The first tank is purified during the successive flow of water, pressure of which helps to clean tank walls.

Nevertheless, the user does not always want to mineralize water which was treated earlier, that's why the units of the above type should offer possibilities to connect them to the installation without the set of settling tanks or filters. They should also cooperate with installation which is not equipped with the above mentioned units, and also after installing of the above - to mate with them in both technical and practical terms by e.g. adjustment of their shape to details of the filtrating unit. Such a possibility is offered by the unit earmarked for water demineralization in accordance with the invention.

The unit for demineralization of both filtered and unfiltered water, being the subject-matter of the invention, has a form of oval base with mineralizing pack, to which a tank containing elastic membrane and a set of connections may be connected, to which then the filtrating equipment to supply the system with water is attached. Outer surfaces of the tank are rounded, preferably when their horizontal sections are circular-like shape. The outer shape of the tank has a form of two spherical surfaces turned one to each other, preferably the outer shape of the tank resembles an egg with a stabilizing flange situated at the bottom. In the central part of the tank, on its outer surface, the reinforcing band is situated, preferably the height of such a band located inside the unit determines a point where membrane should be fastened. The membrane tightly separates two parts of the tank, and a space below is filled with pressurized air in such a way, that it is in contact with walls of the upper part of the tank when it is emptied. Preferably, pressure under the membrane is lower than pressure of water in water supply system. In the lower part of the tank, the non-return valve is situated. Water is supplied through the connection equipped with a valve which is mounted upwards, at the level near to the maximum height of the tank. At the top of the tank there is a cover
- crown -cap which locks the system. The base containing the mineralizing packs, contains the inside, closed chamber, which additionally is divided in the point where connections get into it in such a way that along the whole length of base circumference, a water circulation is forced. Preferably, inside configuration of the base causes disturbances in wa ter flow, for example because of local protrusions existence.

After opening of the valve in the upper unit part, the membrane is pushed down by water flowing into the tank. As a result of compressing the air gathered below the membrane, at a certain moment pressure in the tank will be equalized and water flow into its inside through the valve mounted on the connection will be stopped. Then, the liquid will be able to flow under the pressure of decompressing air. Pushed out water passes through the same valve, it previously got through into the tank. Next, it flows into the base containing at least two chambers separated one from each other, where at least two mineralizing beds are placed, preferably one in each chamber.

Configuration of the mineralizing base forces water circulation, whereas protrusions situated in its inside stabilize packs and at least one partition, disturb water flow forcing it to penetrate pores of substances used to produce packs. Preferably, mineralizing packs should be of two kinds; preferably - one of them contains mineralizing bed, and the second - carbon originating from coconut shells. Preferably, in the inside of the mineralizing base at least two sockets for fastening screws - one per each pack - are made. They protect the packs against their displacement.

After passing through the material of base packs, water is leaving it through the second opening situated near the connection delivering it from the tank. Then, through the pipes, it is directed to the outflow.

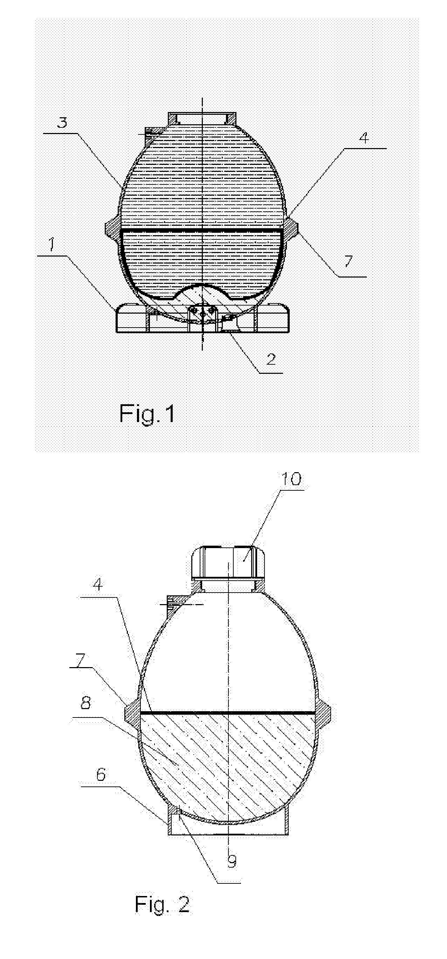

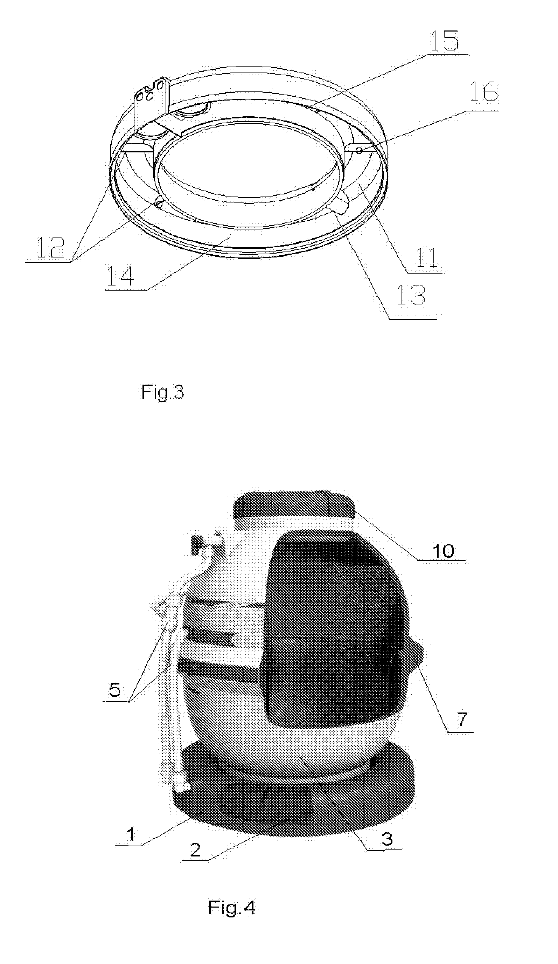

The unit in accordance with the invention was presented in the figures where Fig.1 presents section of the unit, Fig. 2. presents the tanks with locking crown-cap, Fig.3 presents the mineralizing base and Fig.4 shows the assembled unit.

The unit for mineralization of the filtered water being the subject-matter of the invention is composed of the oval mineralizing base 1 with mineralizing beds 2 and the tank 3, where elastic membrane 4 is placed and of the set of connections 5, to which then the filtrating equipment to supply the system with water is attached. Outer surfaces of the tank 3 are rounded and they have in their horizontal sections a circular-like shape. The outer shape of the tank has a form of two spherical surfaces turned one to each other and it resembles an egg with a stabilizing flange 6 situated at the bottom. In the central part of the tank 3, on its outer surface, the reinforcing band 7 is situated, the height of a band determines a point where membrane 4 should be fastened in the tank 3 inside. The membrane 4 tightly separates two parts of the tank one from each other , and a space 8 below is filled with pressurized air in such a way, that it is in contact with walls of the upper part of the tank 3 when it is emptied. The pressure under the membrane 4 is lower than pressure of water in water supply system. In the lower part of the tank 3, the non-return valve 9 is situated. It is used to adjust the pressure in the lower part of the tank 3. Water is supplied through the connection 5 , and its flow is closed by the valve situated in filtration system at the moment when pressure inside the tank and in the system are equalized. At the top of the tank 3 there is a cover - crown -cap 10 which closes the system. The base 1 containing the mineralizing packs 2 , contains the inside, closed chamber 11 , which additionally is divided in the point where connections get into it in such a way that along the whole length of base 1 circumference, a water circulation is forced. Inside configuration of the base causes interferences in water flow, for example, by means of local protrusions 12 and partition 13, which protect filtrating beds against their mixing.

After opening of the valve in the filtration system in the upper part of the tank 3, the membrane 4 is pushed down by liquid flowing into the tank 3. As a result of compressing the air gathered below the membrane, at a certain moment pressure in the tank 3 will be equalized and water flow into its inside through the valve mounted on the connection will be stopped. Then, after closing of the valve supplying the water, the liquid will be able to flow under the pressure of decompressing air. Pushed out water passes through the connection valve through which it previously got through into the tank 3 . Next, it flows into the base 1 containing at least two chambers 14 and 15 separated one from the other, where at least two mineralizing beds 2 are placed, one per each chamber.

Configuration of the mineralizing base 1 forces water circulation, whereas protrusions 12 situated in its inside stabilize packs and at least one partition 13 , disturb water flow forcing it to penetrate pores of substances used to produce packs 2. Mineralizing packs 2 are of two kinds; the pack 2 in the chamber 14 contains mineralizing bed, whereas the pack in the chamber 15 - contains the bed improving taste and smell of the water.
In the inside of the mineralizing base 1, at least two sockets 16 for screws fastening the mineralizing base 1 to the stabilizing flange 6 are made.

After passing through the material of base packs, water is leaving it through the second opening situated near the connection delivering it from the tank. Then, through the pipes, it is directed to the outflow.

The subject-matter of the invention may be installed separately as the mineralizer for initially untreated water as well as for water treated in home or industrial filters. The outer shape of the unit enables its assembly e.g. in a form of the ring surrounding the base or the capping of such units.

## Claims

1. The unit to mineralize both filtered and unfiltered water, **characterized in that** it is composed of the oval base 1 with the mineralizing packs 2, to which the tank 3 is attached, containing in its inside the elastic membrane 4 which separates two parts of the tank 3 one from each other and of the set of connections 5, where filtrating equipment to supply the system with water is attached to. The outer shape of the tank 3 has a form of two spherical surfaces turned one to each other.

2. The unit according to the claim 1, **characterized in that** the pressure in the part of the tank 3 under the membrane 4 is lower that the pressure of water in water supply system delivering water to the unit.

3. The unit according to the claim 2, **characterized in that** the outer surfaces of the tank 3 are rounded and have in their horizontal sections a circular-like shape.

4. The unit according to the claim 3, **characterized in that** the outer shape of the tank 3 resembles an egg with the stabilizing flange 6 situated at the bottom.

5. The unit according to the claim 3 or 4, **characterized in that** in the central part of the tank 3, on its outer surface, the reinforcing band 7 is situated , the height of which determines a point inside the unit where the membrane 4 should be fastened.

6. The unit according to the claim 4 or 5, **characterized in that** in the lower part of the tank 3 , the non-return valve 9 is situated, and water is supplied through the connection 5 provided with a valve, upwards, at the level near to maximum height of the tank 3.

7. The unit according to the claim 4 or 5 or 6, **characterized in that** at the top of the tank 3 the cover - crown-cap 10 locking the system, is situated.

8. The tank according to the claims from 1 to 7, **characterized in that** the base 1 containing the mineralizing packs 2, is provided with the inside, closed chamber 11, which additionally in the point where connections get into its inside is divided with the partition 13 in such a way, that along the whole length of the base 1 circumference , a water circulation is forced.

9. The unit according to the claims from 1 to 8, **characterized in that** the inside configuration of the base 1 causes disturbances in water flow because of the local protrusions 12.

10. The unit according to the claim 8 or 9, **characterized in that** in the inside of the mineralizing base 1 at least two sockets 16 are made - one per each pack - for fastening screws, protecting the packs 2 against displacement.
